# EUROPEAN PATENT APPLICATION

(11) **EP 4 484 337 A1**
(43) Date of publication of application: **01.01.2025**
(21) Application number: 24181394.8
(22) Date of filing: 11.06.2024
(51) Int. Cl.: B65G 1/04, B65G 1/06

(54) **AUTOMATED STORAGE SYSTEM**

(30) Priority: 29.06.2023 FI 20235759
(71) Applicant: KoVaSat Oy, 69410 Sykäräinen (FI)
(72) Inventor: JOKILEHTO, Joni, 84100 Ylivieska (FI); AUROLAHTI, Janne, 69300 Toholampi (FI); ALI-HAAPALA, Hannu, 69410 Sykäräinen (FI); ALI-HAAPALA, Olli, 68380 Yli-Ullava (FI)
(74) Representative: Berggren Oy

(57) **Abstract**

The automated storage system for storing and retrieving items comprises a rack (50) including a plurality of layers (58) and vertical posts (52) for supporting the layers, each layer including an aisle (86), a plurality of rows (88) extending from the aisle, said plurality of rows including storage locations for storing items (10). Each aisle has at least one loading position and several transfer positions, which transfer position are located along the aisle. The storage system further comprises a first lift (20a) for lifting items to the respective loading positions and for lowering retrieved items from the respective loading positions. The rows include a first row (88a), and the first lift is locating between the first and second ends of the first row and the width of the frame of the first lift is substantially equal to the width of the first row.

## Description

### Technical Field

The invention is related to an automated storage system for storing and retrieving items comprising a rack including a plurality of layers and vertical posts for supporting the layers, each layer including an aisle, a plurality of rows extending from the aisle, said plurality of rows including storage locations along the rows for storing items, each row having a first end near the aisle, a second end and a width, each aisle having at least one loading position and several transfer positions, which transfer positions are located along the aisle aligned to the ends of said plurality of rows and at least one lift for lifting items to the respective loading positions and for lowering retrieved items from the respective loading positions, each of said at least one lift including a frame, having an upper end, a lower end and a horizontal width.

### Background Art

Automated warehouses and storage systems comprise a terminal for receiving and retrieving storable items, a rack having number of layers one on top of the other for storing the items and at least one lift for lifting the items from the terminal to the layers and for lowering the items from the layers back to the terminal. Each layer of the rack includes a plurality of rows having storage locations for storing items. Shuttles retrieve articles from storage locations in the rows and dispatch the articles to the lift or retrieve articles from the lift and store the articles to a storage location on the rack. A computer system coordinates the lift and the shuttles in order to be able to retrieve any item stored to the automated storage system when that article is needed. The item may be a container, a pallet that contains a plurality of individual articles, or a stock-keeping unit (SKU) or a mixture of different types of items, or SKUs. An example of a known automated storage system is disclosed in WO 2013/075075 A1.

A problem relating to the known automated storage system is that the lifts and the terminal for receiving and delivering storable items are placed on the side of the rack, where they require a lot of space. Location of the lifts and the terminal delimit the area of the rack, which makes very difficult to modify and/or expand the rack if more storage capacity is needed. Further, due to the location of the lifts the distance from the lift to the farthest storage location is long, whereby retrieving items takes a lot of time.

An object of the invention is to provide an automated storage system with which drawbacks relation to the prior art can be reduced.

The object of the invention is achieved with a storage system, which is characterized in what is disclosed in the independent patent claim. Some preferred embodiments of the invention are disclosed in the dependent claims.

### Summary of the invention

The invention is related to an automated storage system for storing and retrieving items comprising a rack including a plurality of layers and vertical posts for supporting the layers, each layer including an aisle, a plurality of rows extending from the aisle, said plurality of rows including storage locations along the rows for storing items, each row having a first end near the aisle, a second end and a width. Each aisle has at least one loading position and several transfer positions, which transfer positions are located along the aisle aligned to the ends of said plurality of rows. The storage system further comprises at least one lift for lifting items to the respective loading positions and for lowering retrieved items from the respective loading positions, each lift including a frame, having an upper end, a lower end a horizontal width. Said plurality of rows include a first row and said at least one lift includes a first lift locating between the first and second ends of the first row and the width of the frame of the first lift is substantially equal to the width of the first row. Preferably, said plurality of rows further include at least one second row and said at least one lift includes a second lift locating between the first and second ends of the second row and the width of the frame of the second lift is substantially equal to the width of the second row.

In a preferred embodiment of the storage system according to the invention the width of a row of the plurality of rows is defined by the distance between the adjacent vertical posts of the rack in the direction of the aisle.

In another preferred embodiment of the storage system according to the invention the frame of the at least one lift has a horizontal length, which is substantially equal to the distance between the adjacent vertical posts of the rack in the direction of the row.

In another preferred embodiment of the storage system according to the invention said vertical posts of the rack are configured to act as vertical support parts of the frame of the at least one lift.

An another preferred embodiment of the storage system according to the invention comprises a buffer, which buffer is located on the first row between the aisle and the first lift. The buffer is configured to temporarily store items lifted to the layers before the items are moved to their final storage locations.

In another preferred embodiment of the storage system according to the invention the at least one lift includes a movable platform for carrying items and lifting means including a motor for raising and lowering the platform. The motor may be placed at the upper end of the frame and connected to the platform via a cable. Alternatively, the motor can be placed at the lower end of the frame and connected to the platform via a cable and at least one pulley, which at least one pulley is placed at the upper end of the frame.

In some embodiments of the storage system according to the invention said lifting means comprise a chain extending from the lower end of the frame to the upper end of the frame and the motor is placed on the platform and provided with a gearwheel, which is in connection to the chain.

An another preferred embodiment of the storage system according to the invention further comprises a terminal for receiving storable items and for retrieving stored items and said at least one lift is configured to lift items from the terminal to the respective loading positions and to lower items from the respective loading positions to the terminal. Preferably, said terminal is located at least partly below the layers.

An another preferred embodiment of the storage system according to the invention further comprises at least one shuttle movable along the aisle for carrying storable items from the loading position to the transfer positions. Preferably, at least one of the shuttles is a dual shuttle including a first cart movable along the aisle between the loading position and the transfer positions and a second cart configured to be carried by the first cart between the loading position and the transfer positions, the second cart being movable in either direction between a transfer position and a storage location along a row while carrying an item.

An advantage of the invention is, that area and volume of the storage system can be used more efficiently, whereby the storage capacity and the utilization degree of the storage system increases.

Another advantage of the invention is that construction and maintaining costs of the storage system are reduced.

A further advantage of the invention is that it is possible to change the location and/or number of lifts after the storage system has been built, whereby the storage system is easy to modify and/or to enlarge when needed.

### Brief Description of the Drawings

In the following the invention will be described in detail, by way of examples, with reference to the accompanying drawings in which,
- Fig. 1a: depicts a part of a storage system according to the invention seen diagonally from the side,
- Fig. 1b: depicts a first side elevation of the storage system of fig. 1a,
- Fig. 1c: depicts a second side elevation of the storage system of fig. 1a,
- Fig. 2: depicts a horizontal elevation of a storage system according to the invention and
- Figs. 3a 3b: depict lifts, which can be used in the storage system according to the invention.

### Detailed Description

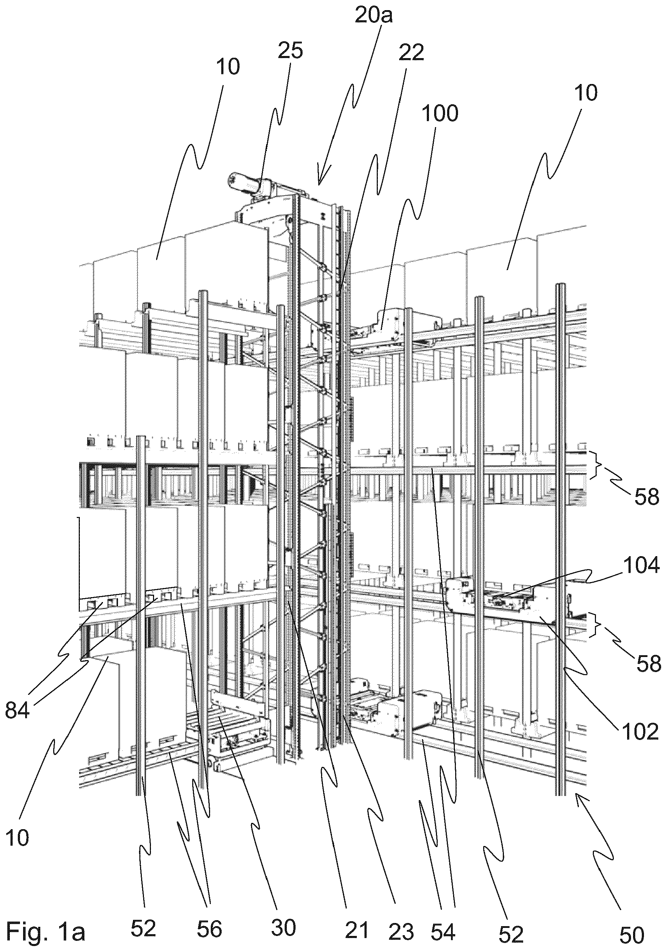

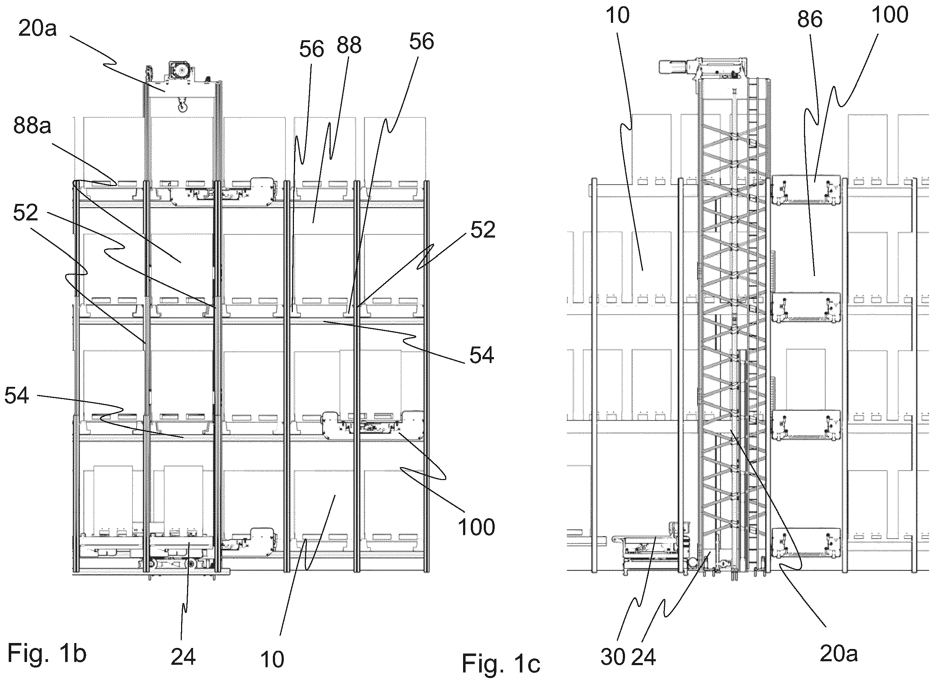

In figures 1a, 1b and 1c a part of a storage system according to the invention is depicted. Various embodiments of the storage system can be made without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Fig. 1a shows a section of a rack 50 belonging to the storage system seen diagonally from the side. Fig. 1b depicts a first side elevation of the storage system shown in fig. 1a and fig. 1c depicts a second side elevation of the storage system shown in fig. 1a.

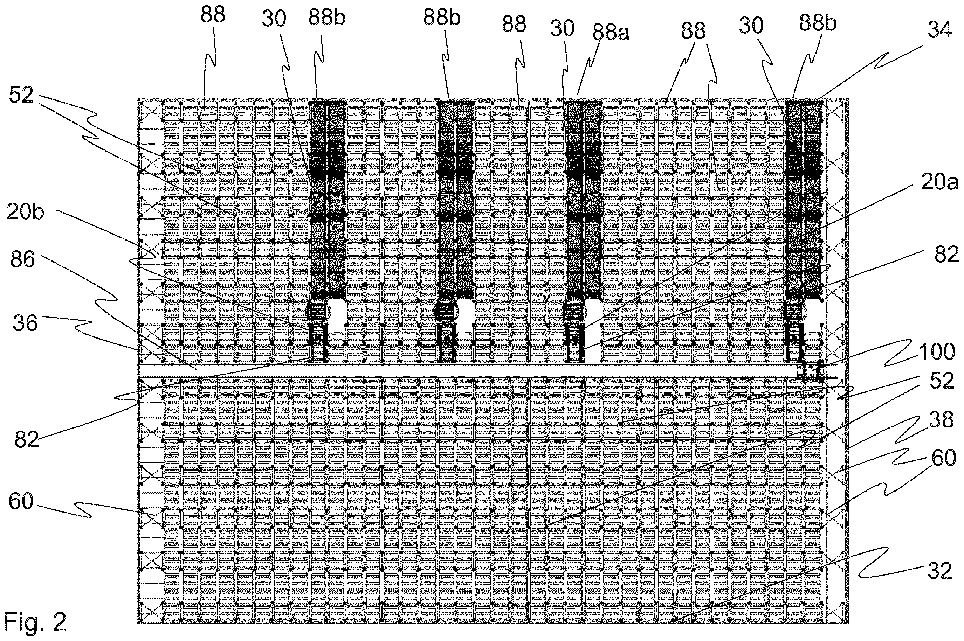

As shown in figs. 1a to 1c the rack 50 includes a plurality of vertical posts 52 arranged in a grid, a plurality of first horizontal elements 54 extending in a first direction to connect adjacent vertical posts and a plurality of second horizontal elements 56 extending in a second direction perpendicular to the first direction. The second horizontal elements are connected to the vertical post above the first horizontal elements. Intersecting first and second horizontal elements 54, 56 form a number of layers 58 one of top of the other. Diagonal struts 60 (fig. 2) may also be provided to stiffen the structure. The vertical posts 52 and the first and second horizontal elements 54 and 56 are connected together via suitable mechanical fasteners.

Two adjacent second horizontal elements 56 form a row 88 therebetween as best shown in fig. 1b, which row can be travelled by a second cart 104 as will be described later. Thus, opposing second horizontal elements 56 between two adjacent posts form a row. First horizontal elements 54 may provide a support for second horizontal elements within the rack 50 and are attached to vertical posts 52 with suitable mechanical fasteners.

Items 10 are stored in the rack 50 in predetermined storage locations on rows 88. The weight of the rack and the stored items is transferred to and supported by vertical posts 52. Each of the above element can be formed of a metal such as steel or aluminum and coated as desired, for example by painting. Due to the wide variation in potential sizes and loadings, one skilled in the art can readily select dimensions and materials for the elements, posts and fasteners to meet a given installation and strength requirements.

Typically, items 10 to be placed on the rack 50 will be moved to and within the rack on a pallet 84, which can be made of wood, polymer or metal. However, items stored in the rack may include loads, articles or goods on pallets or without pallets. Each layer has at least one aisle 86 best shown in fig. 1c proving a path for a shuttle 100 moving along the aisle. Items are moved within the rack 50 in each layer along an aisle 86 and then along one of the rows 88. Various shuttles 100 and carts can be used for moving items in and out of the storage locations and the rack. Shuttles travelling along the aisle are supported by the first horizontal elements 54, i.e the first horizontal elements form a track for the shuttles travelling along the aisle. First horizontal elements 54 may be replaced or supplemented by track elements, which are designed to act as rails, which allow the shuttle to travel along the aisle 86. Each row 88 of the layer extending from the aisle has a first end near the aisle and a second end farthest from the aisle. Preferably, the aisle is located substantially in the middle of the layer whereby two aligned rows extend to opposite directions of the aisle. Each aisle has several transfer positions, which are located along the aisle aligned to the first ends of the rows of the layers.

The storage system according to the invention further comprises a terminal for receiving storable items into the storage system and for retrieving stored items out of the storage system. The terminal contains an open area, into which carrier vehicles, such as container carriers, trucks or lorries can drive in for loading and/or unloading cargo containing items stored in the storage system. In the invention the terminal is located at least partly below at least some of the layers. In the terminal there is at least one first lift 20a, which is configured to lift items from the terminal to the respective layers of the rack and at least one conveyor 30 for moving items from carrier vehicles to the lift and vice versa. Preferably, the conveyors are located at least partly on substantially same level as the first, i.e the lowermost layer, whereby the other layers are locating above the conveyors. The conveyors may be roller conveyors or belt conveyors, for example.

The lift or lifts of the storage system has/have an upright frame 21 having an upper end 22 and a lower end 23, a movable platform 24 (figs. 1b, 1c) for carrying items 10 and lifting means including a motor 25 for raising and lowering the platform. In figs 1a to 1c the motor is placed to the upper end of the frame and connected to the platform via a cable (not shown). Each aisle in each layer has at least one loading position through which items are moved from the lift to the aisle and vice versa.

In the invention a first lift 20a is placed between the first and second ends of the first row 88a of the plurality of rows 88 of the rack and the width of the frame of the first lift is substantially equal to the width of the first row. Preferably, the storage system according to the invention further comprises at least one second lift 20b locating between the first and second ends of a second row 88b and the width of the frame of the second lift is substantially equal to the width of the second row ( Fig. 2). Preferably, the width of all lifts of the storage system is equal. Here, the width of a row is defined by the distance between the adjacent vertical posts of the rack in the direction of the aisle. The frame of the lift has also a horizontal length, which is preferably substantially equal to the distance between the adjacent vertical posts of the rack in the direction of the row. The vertical posts of the rack are configured to act as vertical support parts of the frame of lift, i.e. four vertical post of the rack form the vertical corner posts of the frame of the lift. Thus, in the invention the lifts can be placed within the rack without making any changes to the width of the rows or to the basic structure of the rack.

The storage system comprises at least one shuttle 100 on each layer 58 for carrying storable items from the loading position to the transfer positions. Preferably the shuttle is a dual shuttle including a first (aisle) cart movable 102 along the aisle between the loading position and the transfer positions and a second (row) cart 104 configured to be carried by the first cart between the loading position and the transfer positions. The second cart is movable in either direction between a transfer position and a storage location along a row 88 while carrying an item 10.

In fig. 2 a horizontal section of a storage system according to the invention is shown. The section shows the storage system below the second layer of the rack 50, i.e. the section depicts the first layer of the rack including the conveyors 30 seen from above. The rack comprises vertical posts 52 and first and second horizontal elements as explained above. At both ends of the rack there are diagonal struts 60, which stiffen the structure to better withstand lateral forces. The extreme two vertical post lines connected by diagonal struts define the first and second ends 36, 38 of the rack. As can be seen in fig. 2 the rack comprises an aisle 86 in the middle of the first layer and a plurality of adjacent parallel rows 88 extending from the aisle. Each row has a first end near the aisle and a second end farthest from the aisle. The second ends of the rows define the first and second sides 32, 34 of the rack.

In the embodiment shown in fig. 2 the plurality of rows include a first row 88a and three second rows 88b. A first lift 20a is placed within the rack between the first and second ends of the first row. Similarly, a second lift 20b is placed within the rack between the first and second ends of each second row 88b. Two conveyors 30 extend from each lift to the second side 34 of the rack. Between each lift and the aisle 86 there is a buffer 82 for receiving and temporally storing items. The item lifted by the lift may rest on the buffer before it is transferred to a shuttle 100, which carries it to the final storage location. Similarly, an item retrieved from the storage location may rest on the buffer before it is transferred to the lift, which lowers it to the terminal. The buffer may be a roller conveyor or belt conveyor, for example.

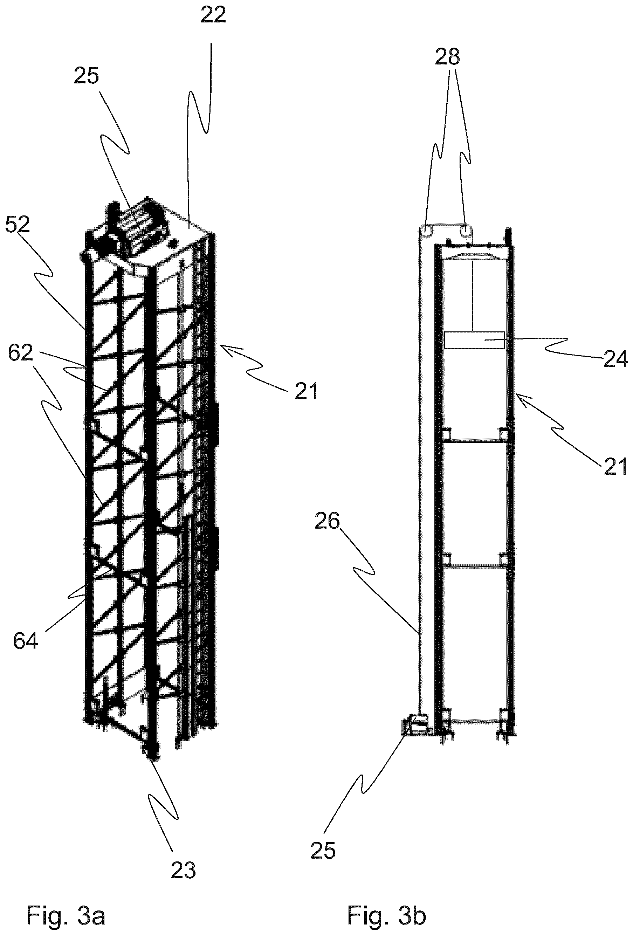

Figs. 3a and 3b depict embodiments of the lifts, which can be used in the storage system according to the invention. In both embodiments shown in the figures the frame 21 of the lift is substantially the same. The frame comprises vertical posts 52, which are connected to adjacent posts by lateral tie bars 64 and diagonal stringers 62. Preferably, the vertical posts are the posts belonging to the structure of the rack as explained above. In fig. 3a the motor 25 of the lift is placed on the upper end 22 of the frame and connected to the movable platform via a cable (cable and platform are not shown in figure 3a) In fig. 3b the motor is placed to the lower end 23 of the frame and connected to the platform 24 by a cable 26, which runs via two pulleys 28. On both embodiments the platform can be raised and lowered by operating the motor.

In a further embodiment of the lift (not shown in figures) the lift comprises a chain extending from the lower end of the frame to the upper end of the frame. The motor is placed on the platform and provided with a gearwheel, which is in connection to the chain. When the gearwheel is rotated to a first rotation direction, the platform climbs upwards along the chain and when the gearwheel is rotated to a second rotation direction, the platform moves downwards suspended by the chain.

Some preferred embodiments of storage system has been disclosed above. The invention is not limited to the solutions explained above, but the invention can be applied in different ways within the limits set by the patent claims.

### Reference Signs:

- 10: item
- 20: lift
- 20a: first lift
- 20b: second lift
- 21: frame
- 22: upper end
- 23: lower end
- 24: platform
- 25: motor
- 26: cable
- 28: pulley
- 30: conveyor
- 32: 1^{st} side
- 34: 2^{nd} side
- 36: 1^{st} end
- 38: 2^{nd} end
- 50: rack
- 52: vertical post
- 54: 1^{st} horizontal element
- 56: 2^{nd} horizontal element
- 58: layer
- 60: strut
- 62: stringer
- 64: tie bar
- 82: buffer
- 84: pallet
- 86: aisle
- 88: row
- 88a: first row
- 88b: second row
- 100: shuttle
- 102: first cart
- 104: second cart

## Claims

1. An automated storage system for storing and retrieving items (10) comprising:
- a rack (50) including a plurality of layers (58) and vertical posts (52) for supporting the layers (58), each layer (58) including
- an aisle (86),
- a plurality of rows (88) extending from the aisle (86), said plurality of rows (88) including storage locations along the rows (88) for storing items (10), each row (88) having a first end near the aisle (86), a second end and a width,
- each aisle (86) having at least one loading position and several transfer positions, which transfer position are located along the aisle (86) aligned to the ends of said plurality of rows (88) and
- at least one lift (20) for lifting items (10) to the respective loading positions and for lowering retrieved items (10) from the respective loading positions, each lift (20) including a frame (21), having an upper end (22), a lower end (23) and a horizontal width,
**characterized in that**
said plurality of rows (88) include a first row (88a) and said at least one lift (20) includes a first lift (20a) locating between the first and second ends of the first row (88a) and the width of the frame (21) of the first lift (20a) is substantially equal to the width of the first row (88a).

2. A storage system according to claim 1, **characterised in that** said plurality of rows (88) further include at least one second row (88b) and said at least one lift (20) includes a second lift (20b) locating between the first and second ends of the second row (88b) and the width of the frame (21) of the second lift (20b) is substantially equal to the width of the second row (88b).

3. A storage system according to claim 1 or 2, **characterised in that** the width of a row (88) of the plurality of rows (88) is defined by the distance between the adjacent vertical posts (52) of the rack (50) in the direction of the aisle (86).

4. A storage system according to any of the claims 1 to 3, **characterised in that** the frame (21) of the at least one lift (20) has a horizontal length, which is substantially equal to the distance between the adjacent vertical posts (52) of the rack (50) in the direction of the row (88).

5. A storage system according to any of the claims 1-4, **characterised in that** said vertical posts (52) of the rack (52) are configured to act as vertical support parts of the frame (21) of the at least one lift (20).

6. A storage system according to any of the claims 1-5, **characterised in that** the storage system comprises a buffer (82), which buffer (82) is located on the first row (88a) between the aisle (86) and the first lift (20a).

7. A storage system according to any of the claims 1-6, **characterised in that** the at least one lift (20) includes a movable platform (24) for carrying items (10) and lifting means including a motor (25) for raising and lowering the platform (24).

8. A storage system according to claim 7, **characterised in that** the motor (25) is placed at the upper (22) end of the frame (21) and connected to the platform (24) via a cable (26).

9. A storage system according to the claim 7, **characterised in that** the motor (25) is placed at the lower end (23) of the frame (21) and connected to the platform (24) via a cable (26) and at least one pulley (28), which at least one pulley (28) is placed at the upper end (22) of the frame (21).

10. A storage system according to the claim 7, **characterised in that** said lifting means comprise a chain extending from the lower end (23) of the frame (21) to the upper end (22) of the frame (21) and the motor (25) is placed on the platform (24) and provided with a gearwheel, which is in connection to the chain.

11. A storage system according to any of the claims 1 to 10, **characterised in that** said storage system further comprises a terminal for receiving storable items (10) and for retrieving stored items (10) and said at least one lift (20) is configured to lift items (10) from the terminal to the respective loading positions and to lower items (10) from the respective loading positions to the terminal.

12. A storage system according to claim 11, **characterised in that** said terminal is located at least partly below the layers (58).

13. A storage system according to any of the claims 1 to 12, **characterised in that** said storage system further comprises at least one shuttle (100) (58) movable along the aisle (86) for carrying storable items (10) from the loading position to the transfer positions.

14. A storage system according to claim 13, **characterised in that** at least one of the shuttles (100) is a dual shuttle including a first cart (102) movable along the aisle (86) between the loading position and the transfer positions and a second cart (104) configured to be carried by the first cart (102) between the loading position and the transfer positions, the second cart (104) being movable in either direction between a transfer position and a storage location along a row (88) while carrying an item (10).
